# EUROPÄISCHE PATENTSCHRIFT

(11) **EP 4 015 877 B1**
(45) Veröffentlichungstag und Bekanntmachung des Hinweises auf die Patenterteilung: **30.07.2025**
(21) Anmeldenummer: 21211877.2
(22) Anmeldetag: 02.12.2021
(51) Int. Cl.: B60K 1/02, B60K 17/00, B60K 17/02, B60K 17/16, F16H 57/04, B60K 1/00

(54) **E-ACHSEN-GETRIEBE, GEEIGNET FÜR VORWÄRTSFAHRT UND RÜCKWÄRTSFAHRT**
E-AXIS TRANSMISSION, SUITABLE FOR FORWARD AND REVERSE TRAVEL
ENGRENAGE D'ESSIEU ÉLECTRIQUE, ADAPTÉ POUR LA MARCHE AVANT ET LA MARCHE ARRIÈRE

(30) Priorität: 16.12.2020 DE 102020215975
(43) Veröffentlichungstag der Anmeldung: 22.06.2022
(73) Patentinhaber: Robert Bosch GmbH, 70442 Stuttgart (DE)
(72) Erfinder: Saretzki, Manfred, 70190 Stuttgart (DE); Kraeuter, Janek, 71642 Ludwigsburg (Neckarweihingen) (DE)

(56) Entgegenhaltungen:
- DE-A1- 102018 211 360
- DE-B3- 102019 102 078
- US-B2- 8 899 381

## Beschreibung

### Technisches Gebiet

Die Erfindung bezieht sich auf ein E-Achsen-Getriebe, geeignet für Vorwärtsfahrt und Rückwärtsfahrt, mit einem Gehäuse, welches aus entlang einer Trennfuge aneinander liegenden Gehäusehälften gebildet ist, mit einem Differentialgetriebe. Des Weiteren bezieht sich die Erfindung auf die Verwendung des E-Achsen-Getriebes in einem Antriebsstrang eines elektrischen angetriebenen Fahrzeugs oder im Antriebsstrang eines mittels einer Verbrennungskraftmaschine versehenen Hybridantriebs eines Kraftfahrzeugs.

### Stand der Technik

DE 10 2018 211 360 A1 bezieht sich auf ein Schmiermittelversorgungssystem für eine Antriebsvorrichtung eines elektrisch betriebenen Fahrzeugs. Es ist zumindest eine Elektromaschine vorgesehen, deren Rotorwelle über eine Getriebeanordnung auf zumindest eine Flanschwelle eines Fahrzeugrads abtreibt. Die Getriebeanordnung weist zumindest eine Getriebestufe für eine Drehmomentwandlung auf. Das Schmiermittelversorgungssystem umfasst einen Getriebehydraulikkreis, in dem ein Schmiermitteltank über eine Saugleitung mit einer Druckpumpe verbunden ist, mittels welcher in einer Trockensumpfschmierung das Schmiermittel in einer Getriebeversorgungsleitung zu einer Getriebeschmiermittelstelle, etwa ein Zahneingriff der Getriebestufe, geführt wird. Das von der Getriebeschmiermittelstelle abtropfende Schmiermittel sammelt sich in einem Schmiermittelsumpf und wird von dort mittels einer Rückführpumpe in eine Rückführleitung zurück in den Schmiermitteltank geführt. Das Schmiermittelversorgungssystem weist für eine Rotorinnenkühlung zusätzlich zum Getriebehydraulikkreis einen Rotorhydraulikkreis auf. Zur Aktivierung der Rotorinnenkühlung des Rotorhydraulikkreises erfolgt im Schmiermitteltank ein Überdruckaufbau.

DE 10 2019 102078 B3 offenbart ein E-Achsen-Getriebe. Bei bisherigen Antriebskonzepten, vorwiegend mittels Verbrennungskraftmaschinen realisiert, werden Ölwannen eingesetzt, die ein Schmiermittel, wie zum Beispiel Getriebeöl - für gewöhnlich bei Vorwärtsfahrt - sammeln und an entsprechende Bauteile wie Lager oder Radialwellendichtringe verteilen. Lösungen, mit denen gleichzeitig eine angemessene Beölung aller Getriebekomponenten sowohl bei Vorwärts- als auch bei Rückwärtsfahrt des Fahrzeugs sichergestellt werden, sind rar. Hinsichtlich der Elektromobilität steigen zunehmend die Anforderungen an das Rückwärtsfahren elektrisch angetriebener Fahrzeuge. Es werden beispielsweise Zeiten für eine Rückwärtsfahrt von 60 Minuten gefordert, bei einer bestimmten Drehzahl n oder beispielsweise mit einer Geschwindigkeit von 80 km/h oder über eine Strecke von 65 km, zum Beispiel beim Rückwärts-Abschleppen. Diese Anforderungen können mit oder ohne Drehmomentlasten erhoben werden und unterschiedlich oft und lange über die Lebensdauer des Fahrzeugs gefordert werden.

### Darstellung der Erfindung

Erfindungsgemäß wird ein E-Achsen-Getriebe vorgeschlagen, welches geeignet ist für Vorwärtsfahrt und für Rückwärtsfahrt, mit einem Gehäuse, welches aus entlang einer Trennfuge aneinander liegenden Gehäusehälften gebildet und mit einem Differentialgetriebe ausgestattet ist. Innerhalb des Gehäuses ist eine Auffangvorrichtung für ein Schmiermedium vorgesehen, welche in beide Drehrichtungen des E-Achsen-Getriebes, die für Vorwärtsfahrt und für Rückwärtsfahrt sind, wenn das E-Achsen-Getriebe ein Fahrzeug antreibt, mit dem Schmiermedium befüllbar ist.

Durch die erfindungsgemäß vorgeschlagene Lösung kann mithin eine Beölung von mechanischen Komponenten im E-Achsen-Getriebe auch bei Rückwärtsfahrt realisiert werden, so dass die eingangs erwähnten Anforderungen an die Rückwärtsfahrt von elektrisch angetriebenen Fahrzeugen erfüllt werden können.

In einer Ausführungsvariante des erfindungsgemäß vorgeschlagenen E-Achsen-Getriebes ist bei dem E-Achsen-Getriebe die Auffangvorrichtung für das Schmiermedium im Wesentlichen T-förmig ausgebildet. Durch eine derartige Auffangvorrichtung, die im Inneren eines Getriebegehäuses angeordnet wird, kann ein Reservoir von Schmiermedium gebildet werden, welches aufgrund der Wirkung der Schwerkraft gezielt vom oberen Bereich des Gehäuses des erfindungsgemäßen E-Achsen-Getriebes in darunterliegende Bereiche abtropft und auf diese Weise zu beölende Komponenten schmiert.

Beim erfindungsgemäß vorgeschlagenen E-Achsen-Getriebe ist die Auffangvorrichtung mit einem wannenförmigen Bodenteil versehen. Im wannenförmigen Bodenteil sammelt sich ein Schmiermittelvorrat sowohl beim Betrieb des E-Achsen-Getriebes in Drehrichtung für Vorwärtsfahrt als auch im Betrieb des E-Achsen-Getriebes in einer dazu entgegengesetzten Drehrichtung für Rückwärtsfahrt an.

Bei der erfindungsgemäß vorgeschlagenen Lösung ist im E-Achsen-Getriebe vorgesehen, dass das wannenförmige Bodenteil durch ein Stegteil geteilt oder unterbrochen ausgeführt ist und einen ersten Teil und einen zweiten Teil umfasst.

Beim erfindungsgemäßen E-Achsen-Getriebe wird der erste Teil des wannenförmigen Bodenteils bei Drehrichtung des E-Achsen-Getriebes für Vorwärtsfahrt über einen ersten Schmiermedium-Förderpfad befüllt, während der zweite Teil des wannenförmigen Bodenteils bei Drehrichtung des E-Achsen-Getriebes bei Rückwärtsfahrt über einen zweiten Schmiermedium-Förderpfad befüllt wird.

Durch die vorgeschlagene Lösung kann auf eine Rückführpumpe, mit welcher sich in einer Ölwanne ansammelndes Schmiermedium der Auffangvorrichtung zuzuführen wäre, verzichtet werden. Durch eine entsprechende Gestaltung von Schmiermedium-Förderpfaden in beide Drehrichtungen des E-Achsen-Getriebes lässt sich bei der erfindungsgemäß vorgeschlagenen Lösung der Transport des Schmiermediums in die Auffangvorrichtung realisieren, die bevorzugt im oberen Bereich des Gehäuses des E-Achsen-Getriebes untergebracht ist.

In einer Ausführungsvariante des erfindungsgemäß vorgeschlagenen E-Achsen-Getriebes verfügt die Auffangvorrichtung insbesondere über im wannenförmigen Bodenteil eingelassene Ablauföffnungen, über die Schmiermedium beispielsweise zwischen einem ersten Lager einer Eingangswelle des E-Achsen-Getriebes sowie einem zweiten Lager und einem Radialwellendichtring der Eingangswelle abläuft. Durch einen kaskadenförmig gestalteten Weg lässt sich das aus der Auffangvorrichtung abtropfende Schmiermedium an die jeweils zu beölenden Komponenten innerhalb des E-Achsen-Moduls aufgrund der Wirkung der Schwerkraft fördern, ohne dass ein Förderaggregat in Gestalt einer Förderpumpe oder einer Schmiermedium-Rückführpumpe erforderlich wäre.

Erfindungsgemäß ist die Auffangvorrichtung taschenförmig ausgeführt und in eine der beiden Gehäusehälften des Gehäuses eingearbeitet.

In einer Ausführungsvariante des erfindungsgemäß vorgeschlagenen E-Achsen-Getriebes wird das Schmiermedium im ersten Schmiermedium-Förderpfad und im zweiten Schmiermedium-Förderpfad durch einen Differentialkorb sowie durch ein an diesem angeordnetes Differentialrad und/oder ein Zwischenrad oder ein Ritzel einer Zwischenwelle und/oder ein Ritzel auf einer Eingangswelle in die Auffangvorrichtung befördert. Durch die vorgeschlagene Lösung ist sichergestellt, dass bei beiden Drehrichtungen des E-Achsen-Getriebes eine Versorgung der im oberen Bereich des Gehäuses des E-Achsen-Getriebes angeordneten Auffangvorrichtung mit Schmiermedium gewährleistet ist.

Darüber hinaus bezieht sich die Erfindung auf die Verwendung des E-Achsen-Getriebes im Antriebsstrang eines elektrischen angetriebenen Fahrzeugs oder im Antriebsstrang eines mittels einer Verbrennungskraftmaschine versehenen Hybridantriebs eines Kraftfahrzeugs.

### Vorteile der Erfindung

Mit der erfindungsgemäß vorgeschlagenen Lösung können durch das E-Achsen-Getriebe die eingangs erwähnten zunehmend steigenden Anforderungen an die Rückwärtsfahrt eines elektrisch angetriebenen Fahrzeugs erfüllt werden. Die Kosten für eine Rückführpumpe oder eine Förderpumpe für das Schmiermedium innerhalb des Gehäuses des E-Achsen-Getriebes können reduziert und im Idealfall vollständig vermieden werden, da die Förderung des Schmiermediums bei beiden Drehrichtungen, d. h. für Vorwärtsfahrt und Rückwärtsfahrt durch rotierende Komponenten, wie beispielsweise Zahnräder und Differentialkorb innerhalb des Gehäuses des E-Achsen-Getriebes in die erfindungsgemäß im oberen Bereich des Gehäuses angeordnete Auffangvorrichtung erfolgt. Somit können Beölungsaufwände in Gestalt von Förderaggregaten, Rückführpumpen, Leitungen und dergleichen eingespart werden.

Des Weiteren kann durch die erfindungsgemäß vorgeschlagene Lösung eine erhebliche Verlängerung der Lebensdauer durch angemessene Beölung von Radialwellendichtring sowie Lagerungen realisiert werden, auch bei länger andauernden Rückwärtsfahrten bei mittleren bis höheren Geschwindigkeiten. Des Weiteren kann durch die kontinuierliche Zufuhr von Schmiermedium an die Komponenten des erfindungsgemäßen E-Achsen-Getriebes eine Kühlung verbessert werden, insbesondere am Radialwellendichtring sowie an den Lagerstellen von Eingangswelle, Zwischenwelle und im Bereich der Differentialgetriebekomponenten.

Durch die erfindungsgemäß vorgeschlagene Lösung kann eine Auffangvorrichtung mit zwei Reservoirs bereitgestellt werden, die von beiden Seiten, d. h. bei Vorwärtsfahrt wie auch bei Rückwärtsfahrt ein Sammeln des von den Zahnrädern aufgeschleuderten Schmiermediums ermöglicht, um abhängig von Vorwärts- oder Rückwärtsfahrt das Schmiermedium in bewusst unterschiedlichen Mengen an beispielsweise den Radialwellendichtring sowie die Lagerung zu führen. Alternativ können die beiden Reservoirs auch durch eine Öffnung innerhalb einer Trennwand beispielsweise miteinander verbunden sein. Dies ermöglicht zum Beispiel bei Vorwärtsfahrt eine Beölung der Komponenten durch Ölführungen, die normalerweise lediglich bei Rückwärtsfahrt mit Öl versorgt werden und umgekehrt. So kann beispielsweise gezielt für eine Rückwärtsfahrt, zum Beispiel 60 Minuten bei einer Drehzahl n - wie aber auch für eine Rückwärtsfahrt über 60 Sekunden - viel oder wenig Schmiermedium, beispielsweise zum Radialwellendichtring geführt werden, der unter Versorgung einer bestimmten Ölmenge die Dichtheit sicherstellt, selbst wenn dieser eine Ölförderrichtung besitzt, die für gewöhnlich für eine Vorwärtsfahrt optimiert ist. Die zutreffende Ölmenge für beispielsweise den Radialwellendichtring kann durch den Durchmesser beziehungsweise die generelle Ausgestaltung der Ölzuführung von Öl zu Wanne beispielsweise im Radialwellendichtring erfolgen.

Durch die erfindungsgemäß vorgeschlagene, bevorzugt T-förmig gestaltete Auffangvorrichtung für das Schmiermedium wird eine Lösung präsentiert, mit der nach Durchführung von Beölungstests eine bestimmte, jeweils durch die Tests ermittelte Menge Schmiermedium zum Radialwellendichtring befördert werden kann, um die Dichtheit bei Rückwärtsfahrt - wie von den Fahrzeugherstellern zunehmend gefordert - über eine gewisse Zeitspanne bei einer bestimmten Drehzahl zu gewährleisten.

Anstelle eines separaten, T-förmig gestalteten Bauteils als Auffangvorrichtung für Schmiermedium kann die Auffangvorrichtung auch durch die Gussform des Gehäuses beziehungsweise des Deckels realisiert werden. Bei einer Ausgestaltung des als eingegossene Tasche in einer der Gehäusehälften des Gehäuses ist ein Kostenvorteil erzielbar; andererseits kann bei der Ausgestaltung der Auffangvorrichtung als separates Bauteil beispielsweise aus Kunststoff oder metallischem Material ein höherer Freiheitsgrad in der Gestaltung erreicht werden.

### Kurze Beschreibung der Zeichnungen

Ausführungsformen der Erfindung werden anhand der Zeichnungen und der nachfolgenden Beschreibung näher erläutert.

Es zeigen:
- Figur 1: eine nicht beanspruchte
- Figur 2: Auffangvorrichtung für ein Schmiermedium, eine Seitenansicht der Auffangvorrichtung für ein Schmiermedium gemäß Figur 1,
- Figur 3: eine Ausführungsmöglichkeit der Auffangvorrichtung für ein Schmiermedium in einer Gehäusehälfte des Gehäuses und
- Figur 4: eine Seitenansicht der in Figur 3 dargestellten Ausführungsvariante der Auffangvorrichtung für ein Schmiermedium.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

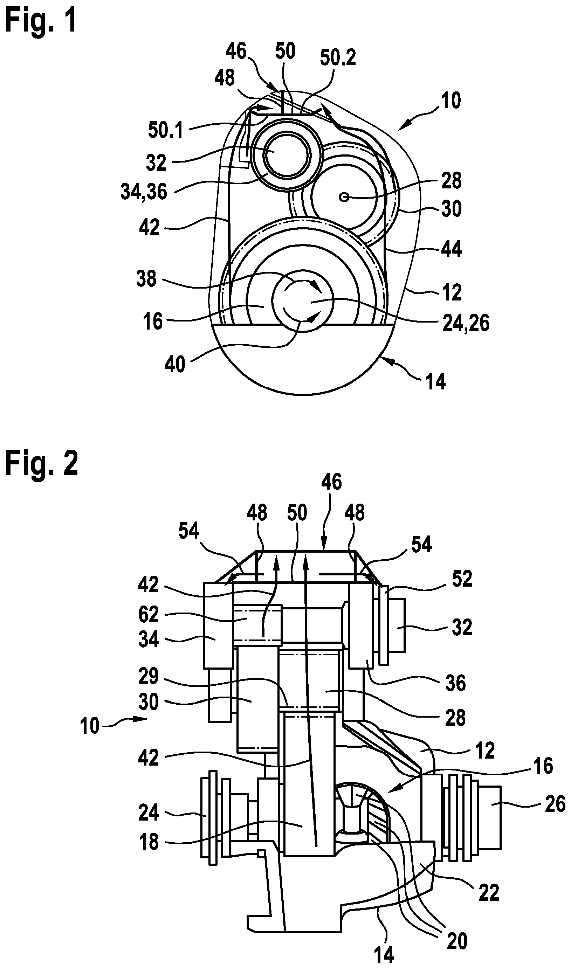

Der Darstellung gemäß Figur 1 ist ein E-Achsen-Getriebe 10 zu entnehmen, in dessen Gehäuse 12 eine Auffangvorrichtung 46 für Schmiermedium integriert ist.

Das E-Achsen-Getriebe 10 gemäß Figur 1 umfasst ein Gehäuse 12 und eine im unteren Bereich liegende Ölwanne 14 samt Differentialgetriebe 16. Am Differentialgetriebe 16 befindet sich ein Differentialrad 18 am Differentialkorb 22, der eine Anzahl miteinander kämmender Kegelräder 20 umschließt. Abtriebsseitig umfasst das Differentialgetriebe 16 eine erste Abtriebswelle 24 sowie eine zweite Abtriebswelle 26. Im Gehäuse 12 des E-Achsen-Getriebes 10 ist darüber hinaus eine Zwischenwelle 28 aufgenommen, an der ein Zwischenrad 30 aufgenommen ist. Des Weiteren ist im Gehäuse 12 des E-Achsen-Getriebes 10 gemäß der Darstellung in Figur 1 eine Eingangswelle 32 aufgenommen.

Aus der Darstellung gemäß Figur 1 geht des Weiteren hervor, dass sich im oberen Bereich des Gehäuses 12 eine Auffangvorrichtung 46 für Schmiermedium befindet. Die Auffangvorrichtung 46 kann als separates Bauteil aus Kunststoffmaterial oder metallischem Material gefertigt werden und umfasst im Wesentlichen ein sich vertikal erstreckendes Stegteil 48, an dessen unteren Enden sich ein Bodenteil 50 befindet. Das Bodenteil 50 ist eben oder wannenförmig ausgeführt und umfasst einen ersten Teil 50.1 sowie einen zweiten Teil 50.2. Des Weiteren sind an den Seiten des eben oder wannenförmig ausgebildeten Bodenteils 50 Abläufe 54 vorgesehen.

Beim E-Achsen-Getriebe 10 erfolgt eine Förderung des Schmiermediums ausgehend von der Ölwanne 14 entlang eines ersten Schmiermedium-Förderpfades 42 bei Drehrichtung 38 für Vorwärtsfahrt. Das Schmiermedium wird aus der Ölwanne 14 durch den in dieser rotierenden Differentialkorb 22 sowie das Differentialrad 18, ein Zwischenwellenritzel 29 und das Zwischenrad 30 und ein Ritzel auf einer Eingangswelle 32 entsprechend dem ersten Schmiermedium-Förderpfad 42 in den ersten Teil 50.1 des eben oder wannenförmig ausgebildeten Bodenteils 50 der Auffangvorrichtung 46 befördert.

Im Gegensatz dazu erfolgt eine Förderung des Schmiermediums in Drehrichtung 40 bei Rückwärtsfahrt ausgehend vom Differentialkorb 22, der in dem in der Ölwanne 14 bevorrateten Schmiermediumvorrat rotiert, ferner über das Differentialrad 18, das Zwischenwellenritzel 29, das Zwischenrad 30, welche an der Zwischenwelle 28 aufgenommen sind, sowie über das Ritzel auf der Eingangswelle 32 in den zweiten Teil 50.2 des ebenen oder wannenförmigen Bodenteils 50 der Auffangvorrichtung 46.

Figur 2 zeigt eine Seitenansicht des E-Achsen-Getriebes 10 gemäß der Darstellung gemäß Figur 1.

Aus Figur 2 geht hervor, dass im ebenen oder wannenförmigen Bodenteil 50 der Auffangvorrichtung 46 Abläufe 54 vorgesehen sind. Sowohl bei Vorwärtsfahrt als auch bei Rückwärtsfahrt, d. h. bei Drehrichtung 38 wie auch bei der zu dieser entgegengesetzten Drehrichtung 40 erfolgt ein Abtropfen von Schmiermedium durch die Abläufe 54 aufgrund der Wirkung der Schwerkraft in Richtung der Ölwanne 14 am Boden des Gehäuses 12. Die Abläufe 54 sind so positioniert, dass beispielsweise Schmiermedium unmittelbar an ein erstes Lager 34 der Eingangswelle 32 sowie an deren zweites Lager 36 und einen Radialwellendichtring 52 verläuft. Von der zu beölenden Eingangswelle 32 gerät das Schmiermedium an die Zwischenwelle 28, das dortige Zwischenrad 30 sowie die entsprechenden Lagerstellen der Zwischenwelle 64 bis zum Differentialgetriebe 16 und wird schlussendlich in der Ölwanne 14 im unteren Bereich des Gehäuses 12 aufgefangen. Durch den Stegteil 48, der in Figur 2 in einer Seitenansicht dargestellt ist, erfolgt die Teilung des ebenen oder wannenförmigen Bodenteils 50 in den ersten Teil 50.1 sowie in den zweiten Teil 50.2. In jedem der beiden Teile 50.1 und 50.2 des ebenen oder wannenförmigen Bodenteils 50 wird entsprechend den Schmiermedium-Förderpfaden 42, 44 Schmiermedium befördert.

Durch die vorgeschlagene Auffangvorrichtung 46 werden zwei Teile 50.1 und 50.2 generiert, die von beiden Seiten, d. h. bei Drehrichtung 38 für Vorwärtsfahrt sowie bei Drehrichtung 40 für Rückwärtsfahrt, ein Sammeln des von den Zahnrädern 30, 18 und 62 sowie vom Differentialkorb 22 aufgeschleuderten Schmiermediums ermöglichen, um abhängig von Vorwärts- oder Rückwärtsfahrt das Schmiermedium in unterschiedlichen Mengen an beispielsweise den Radialwellendichtring 52 und an das zweite Lager 36 beziehungsweise das erste Lager 34 der Eingangswelle 32 zu fördern. So kann gezielt für eine Rückwärtsfahrt, zum Beispiel von 60 Minuten Dauer bei einer Drehzahl n wie aber auch für eine Rückwärtsfahrt über 60 Sekunden viel oder wenig Öl, zum Beispiel zum Radialwellendichtring 52 geführt werden, der bei Versorgung mit einer bestimmten Ölmenge die Dichtheit sicherstellt, selbst wenn diese eine Ölförderrichtung besitzt, die - wie allgemein üblich - für die Vorwärtsfahrt, d. h. die Drehrichtung 38 optimiert ist. Die in Tests ermittelte Ölmenge für den Radialwellendichtring 52 beispielsweise kann durch Durchmesser beziehungsweise die generelle Ausgestaltung der Ölführung von der Ölwanne 14 zum Radialwellendichtring 52 erfolgen. Die im Wesentlichen T-förmig ausgebildete Auffangvorrichtung 46 stellt eine Lösung dar, mittels welcher die Durchführung von Beölungstests eine bestimmte durch eben diese Tests ermittelte Menge an Schmiermedium zum Radialwellendichtring 52, platziert auf der Eingangswelle 32, befördert werden kann, um die Dichtheit bei Rückwärtsfahrt, d. h. bei Drehrichtung 40 des E-Achsen-Getriebes 10, wie vom Kunden gefordert, über einen gewissen Zeitraum oder bei einer bestimmten Drehzahl zu gewährleisten.

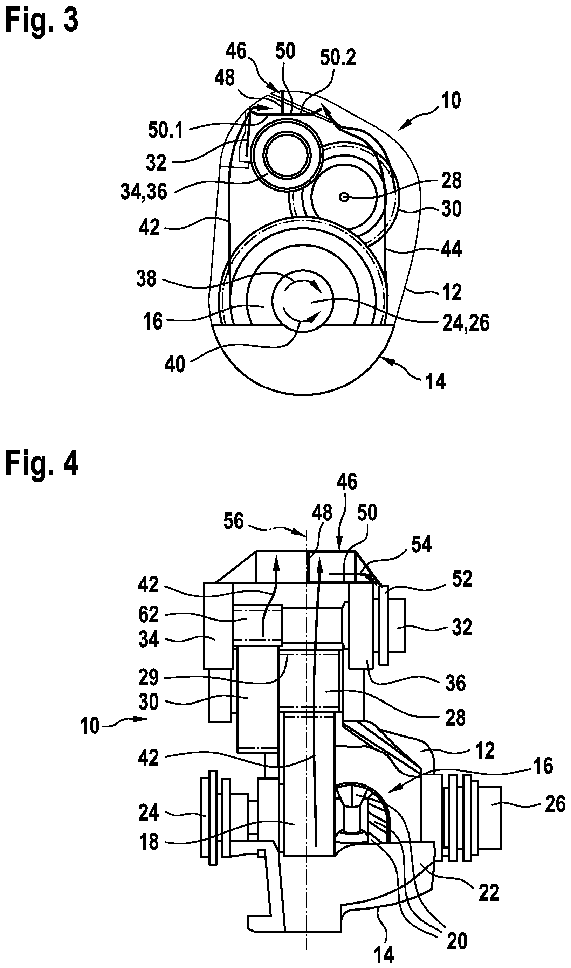

In den Figuren 3 und 4 ist eine Ausführungsvariante des erfindungsgemäß vorgeschlagenen E-Achsen-Getriebes 10 dargestellt.

Figur 3 entspricht im Wesentlichen der bereits beschriebenen Figur 1, jedoch mit dem Unterschied, dass sich die Auffangvorrichtung 46 für das Schmiermedium, die im oberen Bereich des Gehäuses 12 des E-Achsen-Getriebes 10 angeordnet ist, in nur einer Gehäusehälfte des Gehäuses 12 befindet. In der Darstellung gemäß Figur 3 ist die Auffangvorrichtung 46 nicht als separates Bauteil aus metallischem Material oder aus Kunststoffmaterial gefertigt, sondern taschenförmig in eine der Gehäusehälften (vgl. Darstellung gemäß Figur 4) eingelassen. Figur 3 zeigt ebenfalls den ersten Schmiermedium-Förderpfad 42 für die Drehrichtung 38 für Vorwärtsfahrt sowie den zweiten Schmiermedium-Förderpfad 44 für die Drehrichtung 40 bei Rückwärtsfahrt des E-Achsen-Getriebes 10. Die Förderung des Schmiermediums erfolgt im Wesentlichen ausgehend von der Ölwanne 14 über das Differentialrad 18, das Zwischenwellenritzel 29 und das Zwischenrad 30 der Zwischenwelle 28 sowie über das Ritzel 62 der Eingangswelle 32, entweder in den ersten Teil 50.1 oder in den zweiten Teil 50.2 des eben oder wannenförmig ausgebildeten Bodenteils 50 der Auffangvorrichtung 46 für das Schmiermedium.

Der Darstellung gemäß Figur 4 ist eine Seitenansicht der in Figur 3 dargestellten Ausführungsvariante des erfindungsgemäßen E-Achsen-Getriebes 10 zu entnehmen.

Aus der Seitenansicht gemäß Figur 4 wird deutlich, dass das Gehäuse 12 die erste Gehäusehälfte sowie die zweite Gehäusehälfte umfasst. Die beiden Gehäusehälften liegen entlang einer Trennfuge 56 dichtend aneinander an. Aus der Seitenansicht gemäß Figur 4 geht hervor, dass sich die Auffangvorrichtung 46 für das Schmiermedium in dieser Ausführungsvariante in der zweiten Gehäusehälfte befindet. Die Auffangvorrichtung 46 ist taschenförmig in die zweite Gehäusehälfte eingegossen, d. h. direkt bei deren Herstellung gefertigt wird, so dass sich der Einsatz eines separaten Bauteils erübrigt.

Eine taschenförmige Ausgestaltung der Auffangvorrichtung 46 ermöglicht einerseits geringere Kosten und andererseits weniger Gewicht, da weniger Material sowie gegebenenfalls ein verbesserter Ölfluss im E-Achsen-Getriebe 10 erreicht werden kann. Eine taschenförmig ausgebildete Auffangvorrichtung 46 kann - sofern sie direkt im Gussmodell eingearbeitet ist - im Idealfall kostenneutral erzeugt werden. Eine nur auf einer der beiden Gehäusehälften des Gehäuses 12 erzeugte taschenförmige Auffangvorrichtung 46 kann auch über die Trennfuge 56 der beiden Gehäusehälften hinausragen, um gegebenenfalls durch eine entsprechend größere Auslegung des ebenen oder wannenförmigen Bodenteils 50 eine vergrößerte Auffangfläche für das geförderte Schmiermedium zu erzeugen.

Alternativ kann je nach Lager und Achsbeugewinkel des E-Achsen-Getriebes 10 die Tasche platziert werden.

In den Ausführungsvarianten der Figuren 1 und 2 ist eine derartige Auffangvorrichtung 46 als separates Bauteil aus Kunststoffmaterial oder metallischem Material realisiert.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. E-Achsen-Getriebe (10), geeignet, ein Fahrzeug in Vorwärtsfahrt und in Rückwärtsfahrt anzutreiben, mit einem Gehäuse (12), welches aus entlang einer Trennfuge (56) aneinander liegenden Gehäusehälften gebildet ist, mit einem Differentialgetriebe (16), wobei innerhalb des Gehäuses (12) eine Auffangvorrichtung (46) für ein Schmiermedium vorgesehen ist, welches in den beiden Drehrichtungen (38, 40) des E-Achsen-Getriebes (10), die für Vorwärtsfahrt und für Rückwärtsfahrt sind, wenn das E-Achsen-Getriebe ein Fahrzeug antreibt, mit dem Schmiermedium befüllbar ist, wobei die Auffangvorrichtung (46) ein ebenes oder ein wannenförmiges Bodenteil (50) aufweist, wobei das ebene oder wannenförmige Bodenteil (50) durch ein Stegteil (48) geteilt oder unterbrochen ausgeführt ist und einen ersten Teil (50.1) und einen zweiten Teil (50.2) umfasst, wobei das E-Achsen-Getriebes (10) dazu ausgestaltet ist, den ersten Teil (50.1) des ebenen oder wannenförmigen Bodenteils (50) bei Drehrichtung (38) des E-Achsen-Getriebes (10) für Vorwärtsfahrt über einen ersten Schmiermedium-Förderpfad (42) zu befüllen und wobei das E-Achsen-Getriebes (10) dazu ausgestaltet ist, den zweiten Teil (50.2) des ebenen oder wannenförmigen Bodenteils (50) bei Drehrichtung (40) des E-Achsen-Getriebes (10) für Rückwärtsfahrt über einen zweiten Schmiermedium-Förderpfad (44) zu befüllen, **dadurch gekennzeichnet, dass** die Auffangvorrichtung (46) taschenförmig in einer der beiden Gehäusehälften des Gehäuses (12) eingearbeitet ist.

2. E-Achsen-Getriebe (10) gemäß Anspruch 1, **dadurch gekennzeichnet, dass** die Auffangvorrichtung (46) im Wesentlichen T-förmig ausgebildet ist.

3. E-Achsen-Getriebe (10) gemäß den Ansprüchen 1 oder 2, **dadurch gekennzeichnet, dass** es eine Eingangswelle (32) und einen Radialwellendichtring (52) aufweist und dass die Auffangvorrichtung (46) Abläufe (54) umfasst, über die Schmiermedium zwischen einem zweiten Lager (36) der Eingangswelle (32) und einem Radialwellendichtring (52) und oberhalb eines ersten Lagers (34) der Eingangswelle (32) abläuft.

4. E-Achsen-Getriebe (10) gemäß den Ansprüchen 1 bis 3, **dadurch gekennzeichnet, dass** Schmiermedium im ersten Schmiermedium-Förderpfad (42) und im zweiten Schmiermedium-Förderpfad (44) durch einen Differentialkorb (22) sowie durch ein Differentialrad (18), ein Zwischenrad (30), ein Zwischenwellenritzel (29), eine Zwischenwelle (28) und eine Eingangswelle (32) in die Auffangvorrichtung (46) gefördert wird.

5. Verwendung des E-Achsen-Getriebes (10) gemäß einem der Ansprüche 1 bis 4 im Antriebsstrang eines elektrischen angetriebenen Fahrzeugs oder im Antriebsstrang eines mittels einer Verbrennungskraftmaschine versehenen Hybridantriebs eines Kraftfahrzeugs.

## Claims

1. E-axle gearbox (10), suitable for driving a vehicle forwards and in reverse, having a housing (12), which is formed from housing halves situated next to each other along a separating joint (56), having a differential gearbox (16), wherein a collecting device (46) for a lubricating medium is provided inside the housing (12), which collecting device can be filled with the lubricating medium in the two rotation directions (38, 40) of the E-axle gearbox (10), which are for forward travel and for reverse travel, when the E-axle gearbox drives a vehicle, wherein the collecting device (46) has a flat or a tub-like bottom part (50), wherein the flat or tub-like bottom part (50) is designed in a manner divided or interrupted by a web part (48) and comprises a first part (50.1) and a second part (50.2), wherein the E-axle gearbox (10) is configured to fill the first part (50.1) of the flat or tub-like bottom part (50) via a first lubricating medium conveying path (42) in the rotation direction (38) of the E-axle gearbox (10) for forward travel, and wherein the E-axle gearbox (10) is configured to fill the second part (50.2) of the flat or tub-like bottom part (50) via a second lubricating medium conveying path (44) in the rotation direction (40) of the E-axle gearbox (10) for reverse travel, **characterized in that** the collecting device (46) is incorporated in a pocket-like manner in one of the two housing halves of the housing (12).

2. E-axle gearbox (10) according to Claim 1, **characterized in that** the collecting device (46) is substantially T-shaped.

3. E-axle gearbox (10) according to Claims 1 and 2, **characterized in that** it has an input shaft (32) and a radial shaft sealing ring (52), and **in that** the collecting device (46) comprises drains (54), via which lubricating medium drains between a second bearing (36) of the input shaft (32) and a radial shaft sealing ring (52) and above a first bearing (34) of the input shaft (32).

4. E-axle gearbox (10) according to Claims 1 to 3, **characterized in that** lubricating medium is conveyed into the collecting device (46) through a differential cage (22) and through a differential gear (18), an intermediate gear (30), an intermediate shaft pinion (29), an intermediate shaft (28) and an input shaft (32) in the first lubricating medium conveying path (42) and in the second lubricating medium conveying path (44).

5. Use of the E-axle gearbox (10) according to any of Claims 1 to 4 in the drive train of an electrically driven vehicle or in the drive train of a hybrid drive of a motor vehicle, the hybrid drive being provided by means of an internal combustion engine.

## Revendications

1. Transmission d'essieu électrique (10), appropriée pour entraîner un véhicule en marche avant et en marche arrière, avec un carter (12) qui est formé de moitiés de carter placées l'une contre l'autre le long d'un joint de séparation (56), avec un engrenage différentiel (16), un dispositif de collecte (46) pour un fluide de lubrification étant prévu à l'intérieur du carter (12), lequel peut être rempli avec un fluide de lubrification dans les deux directions de rotation (38, 40) de la transmission d'essieu électrique (10), qui sont pour la marche avant et pour la marche arrière lorsque la transmission d'essieu électrique entraîne un véhicule, le dispositif de collecte (46) présentant une partie de fond (50) plane ou en forme de cuvette, la partie de fond (50) plane ou en forme de cuvette étant réalisée de manière divisée ou interrompue par une partie de nervure (48) et comprenant une première partie (50.1) et une deuxième partie (50.2), la transmission d'essieu électrique (10) étant conçue pour remplir la première partie (50.1) de la partie de fond plane ou en forme de cuvette (50) par l'intermédiaire d'un premier trajet de transport de fluide de lubrification (42) dans la direction de rotation (38) de la transmission d'essieu électrique (10) pour la marche avant et la transmission d'essieu électrique (10) étant conçue pour remplir la deuxième partie (50.2) de la partie de fond plane ou en forme de cuvette (50) par l'intermédiaire d'un deuxième trajet de transport de fluide de lubrification (44) dans la direction de rotation (40) de la transmission d'essieu électrique (10) pour la marche arrière, **caractérisée en ce que** le dispositif de collecte (46) est usiné en forme de poche dans l'une des deux moitiés de carter du carter (12).

2. Transmission d'essieu électrique (10) selon la revendication 1, **caractérisée en ce que** le dispositif de collecte (46) est configuré essentiellement en forme de T.

3. Transmission d'essieu électrique (10) selon les revendications 1 ou 2, **caractérisée en ce qu'**elle présente un arbre d'entrée (32) et une bague d'étanchéité d'arbre radiale (52) et **en ce que** le dispositif de collecte (46) comprend des écoulements (54) par l'intermédiaire desquels le fluide de lubrification s'écoule entre un deuxième palier (36) de l'arbre d'entrée (32) et une bague d'étanchéité d'arbre radiale (52) et au-dessus d'un premier palier (34) de l'arbre d'entrée (32).

4. Transmission d'essieu électrique (10) selon les revendications 1 à 3, **caractérisée en ce que** le fluide de lubrification est transporté dans le dispositif de collecte (46) dans le premier trajet de transport de fluide de lubrification (42) et dans le deuxième trajet de transport de fluide de lubrification (44) à travers un panier de différentiel (22) ainsi qu'à travers une roue de différentiel (18), une roue intermédiaire (30), un pignon d'arbre intermédiaire (29), un arbre intermédiaire (28) et un arbre d'entrée (32).

5. Utilisation de la transmission d'essieu électrique (10) selon l'une quelconque des revendications 1 à 4 dans la chaîne cinématique d'un véhicule à propulsion électrique ou dans la chaîne cinématique d'un véhicule à propulsion hybride équipé d'un moteur à combustion interne.
